# DEMANDE DE BREVET EUROPEEN

(11) **EP 4 576 751 A1**
(43) Date de publication de la demande: **25.06.2025**
(21) Numéro de dépôt: 23315469.9
(22) Date de dépôt: 20.12.2023
(51) Int. Cl.: H04M 1/72412, H04M 1/72424

(54) **ACCESSOIRE NFC PASSIF APTE À COMMUNIQUER AVEC TÉLÉPHONE INTELLIGENT**

(71) Demandeur: Solver, 92330 Levallois (FR)
(72) Inventeur: Chelly, Julia, 92200 Neuilly-sur-Seine (FR); Marciano, Samuel, 75116 Paris (FR)
(74) Mandataire: Oak & Fox

(57) **Abrégé**

Boîtier (10) comprenant une surface de fixation configurée pour être fixée (indirectement à un téléphone (20) intelligent équipé d'un module NFC. Terminal (100) comprenant un tel boitier (10) et un tel téléphone (20). Procédé pour signaler une urgence à l'aide d'un tel terminal (100). Le boîtier (10) comprend une antenne NFC, un circuit intégré passif NFC configuré pour coopérer avec l'antenne, et une interface tactile (11) . L'interface (11) est configurée pour désactiver ledit circuit intégré au repos et pour activer ledit circuit intégré et l'antenne en réponse à un actionnement par un utilisateur. En état d'activation, l'antenne est détectable par ledit module NFC ; en état de désactivation, l'antenne n'est pas détectable par ledit module NFC. Le téléphone (20) est configuré pour communiquer avec un serveur distant via un réseau téléphonique, et pour ouvrir une communication avec ledit serveur et y envoyer un message numérique en réponse à l'actionnement. Le message comprend un identifiant.

## Description

### Domaine de l'invention

La présente invention concerne le domaine de l'appel d'urgence permettant à un détenteur de téléphone intelligent d'activer de manière discrète une procédure automatisée de signalement d'une situation de menace ou de risque, par exemple en cas d'agression ou d'accident.

Le but est de permettre à un utilisateur de déclencher de manière très intuitive cette procédure, sans attirer l'attention d'un éventuel agresseur, et ce quelle que soit l'état du téléphone (en veille, exécutant une autre.application, ...), par une manipulation ne nécessitant pas de visualiser l'écran, et n'occasionnant aucun signal visuel ou acoustique inopiné. Il est également requis que cette procédure ne soit pas déclenchée de manière intempestive, sans intention de l'utilisateur de procéder à un signalement.

Pour cela, il est connu d'équiper un téléphone intelligent (« smartphone » en anglais) d'un bouton d'appel d'urgence, et plus particulièrement, d'une technologie de transmission d'informations d'urgence à un terminal prédéfini et/ou à un serveur d'agence de sécurité lorsqu'un utilisateur de téléphone intelligent touche et enfonce un bouton d'urgence disposé sur une surface arrière, d'un téléphone intelligent en cas d'urgence, et en enregistrant simultanément l'environnement sonore du téléphone à partir duquel a été déclenché le signalement, notamment la voix d'un agresseur ou le contexte sonore venant du lieu d'un accident.

### État de la technique

On connaît dans l'état de la technique la demande de brevet WO2001022702 qui décrit une solution d'alarme de sécurité personnelle améliorée intégrée dans un téléphone sans fil. L'utilisateur peut activer la fonction d'alarme en appuyant simultanément sur deux boutons du clavier pendant une durée prédéterminée. Dans un autre mode de réalisation, un matériel supplémentaire est implémenté dans le téléphone sans fil de telle sorte que l'alarme peut être déclenchée en retirant une broche qui peut être attachée à un cordon. Le téléphone sans fil émettra une alarme sonore forte lorsque l'alarme est activée. Le téléphone sans fil stocke un ou plusieurs sons d'alarme dans sa mémoire non volatile. Lorsque l'alarme est activée, le processeur numérique du téléphone récupère les sons et les joue via un transducteur audio dans le téléphone sans fil. Le transducteur audio émettant l'alarme peut être la , sonnerie du téléphone. En condition d'alarme, la sonnerie émet le son de l'alarme au niveau de volume maximum, quel que soit le niveau auquel l'utilisateur a défini le volume de la sonnerie pour les alertes d'appels téléphoniques entrants ordinaires.

L'utilisateur peut activer l'alarme quel que soit l'état actuel du téléphone. Si le téléphone est allumé et en veille, le téléphone émet immédiatement le son de l'alarme une fois que l'utilisateur active l'alarme. Si l'état actuel du téléphone est à OFF, il se mettra automatiquement sous tension et émettra immédiatement le son de l'alarme. Si le téléphone est allumé et est son état actuel est en cours d'appel téléphonique, le téléphone déconnectera l'appel en cours et émettra immédiatement le son de l'alarme.

Lorsque l'utilisateur active l'alarme, le téléphone tente simultanément de se connecter à un numéro de téléphone d'urgence prédéterminé et d'émettre le son de l'alarme. Le téléphone se réinitialise automatiquement à l'état inactif avant de tenter d'appeler le numéro d'urgence. Si le téléphone est à l'état OFF lorsque l'utilisateur active l'alarme, le téléphone se met sous tension et acquiert le système de communication sans fil actuel. Le système peut être basé sur AMPS, CDMA cellulaire, CDMA PCS ou tout système téléphonique sans fil couramment disponible que le téléphone est configuré pour prendre en charge. L'acquisition du système est conforme à la spécification applicable pour le système de communication qui prend en charge le téléphone sans fil particulier. Le type de service téléphonique sans fil et les spécifications applicables associées à l'acquisition du service au sein du système ne sont pas des facteurs limitant la présente invention.

Si le téléphone est allumé et dans l'état actuel « en communication active », le téléphone déconnectera l'appel en cours et reviendra momentanément à l'état inactif.

Le téléphone sans fil peut déjà être allumé et en état de veille, auquel cas le téléphone est immédiatement prêt à effectuer une tentative automatisée de connexion à un numéro d'urgence prédéterminé.

Une fois que le téléphone est en veille, il tente de se connecter à un numéro d'urgence prédéterminé. Une fois que le téléphone a terminé la connexion au numéro d'urgence, il notifie à l'utilisateur que la connexion est terminée. Cette notification peut être effectuée en faisant clignoter un indicateur sur le téléphone ou en modifiant le son de l'alarme en cours de lecture. Une fois que l'utilisateur reçoit la notification de connexion d'appel, il peut faire taire le son de l'alarme en sachant qu'un opérateur d'appel d'urgence sera déjà connecté. L'utilisateur peut alors parler au téléphone comme lors de n'importe quel appel téléphonique et mettre fin à l'appel téléphonique de la même manière que pour un appel ordinaire. Si nécessaire, l'utilisateur peut réactiver le son de l'alarme sans déconnecter l'appel d'urgence.

Le brevet EP2899893B1 propose une autre solution dans laquelle, lorsqu'une situation d'urgence se produit, un utilisateur de téléphone intelligent touche et enfonce un bouton d'urgence unique prévu sur une surface arrière d'un téléphone intelligent au lieu d'appuyer sur une pluralité de boutons, pour transmettre des informations d'urgence à un terminal de gardien prédéfini et à un serveur d'agence, et enregistrer simultanément la voix d'un criminel venant du lieu d'un accident, favorisant ainsi l'effleurement et l'enfoncement du bouton d'urgence tout en empêchant l'utilisateur de paniquer en cas d'urgence. À cet effet, ce brevet concerne un téléphone intelligent doté d'un bouton d'appel d'urgence selon la présente invention comprend un bouton d'urgence qui est gravé sur une surface arrière du téléphone intelligent de manière à ne pas dépasser de la surface arrière et qui présente une touche unité de détection disposée sur la surface arrière du téléphone intelligent pour détecter un signal tactile en fonction d'une manipulation d'un utilisateur, et une unité de détection de dépression disposée sur une partie inférieure de l'unité de détection tactile pour détecter un signal de dépression en fonction de la manipulation de l'utilisateur ; et une unité de transmission d'appel d'urgence qui, lorsque le signal tactile et le signal d'enfoncement sont reçus du bouton d'urgence, transmet des informations de demande de secours d'urgence prédéfinies à un terminal de gardien et à un serveur d'agence et enregistre une voix provenant de la scène d'un accident en temps réel et l'heure et transmet les informations d'enregistrement en direct à un serveur d'entreprise de communication mobile.

On connaît aussi le brevet coréen KR 10-0827709 concernant un dispositif demandeur de secours doté d'une clé de secours urgente pour la situation urgente d'un demandeur ; un serveur d'entreprise de communication configuré pour recevoir la situation urgente du dispositif demandeur de secours et établir un appel entre le dispositif demandeur de secours et un dispositif sauveteur, dans lequel lorsque la situation urgente est transférée du dispositif sauveteur à un serveur de sécurité, le serveur d'entreprise de communication commute l'appel vers un appel entre le dispositif demandeur de secours et le serveur de sécurité, et transmet un numéro de téléphone du demandeur de secours et des informations de message court au dispositif sauveteur ; un dispositif de secours configuré pour informer la situation d'urgence sur la base du numéro de téléphone du dispositif demandeur de secours et des informations de message court ; et un serveur de sécurité configuré pour connecter le dispositif demandeur de secours et un point de contact d'urgence secondaire (par exemple, un poste de police ou une caserne de pompiers) dans un état de réception unidirectionnel via le serveur de la société de communication.

La demande de brevet US2012/0282886 concerne des systèmes et des procédés permettant à une personne d'activer un signal de détresse via un dispositif portable, tel qu'un téléphone mobile, sans avoir à regarder physiquement le dispositif portable.

La demande de brevet US20190007544 décrit un autre exemple de dispositif et procédé de signalisation d'urgence qui utilisent une unité de base séparable qui est conçue pour être connectée de manière amovible à un smartphone ou à un téléphone portable standard. Les dispositifs et procédés du système d'alarme selon l'invention peuvent être utilisés avec n'importe quel smartphone ou autre appareil téléphonique mobile. L'unité de base est essentiellement un boîtier séparé qui est dimensionné pour contenir partiellement (ou totalement) les tailles et formes connues des téléphones intelligents, et peut être rendu spécifique à un modèle. L'unité comprend une section batterie rechargeable, la section batterie servant à alimenter l'unité de base et à charger sélectivement la batterie du téléphone intelligent connecté. En cas d'urgence, l'utilisateur peut appuyer sur un bouton de panique, le bouton permettant au téléphone intelligent de composer un numéro d'urgence prédéfini tout en prenant simultanément une photo, en traitant les données de localisation et en produisant un signal d'alarme sonore aigu. Lorsque le téléphone destinataire/contact d'urgence reçoit l'appel, les informations de localisation et la photo sont transmises simultanément. La section batterie est suffisamment robuste pour alimenter le smartphone et la fonction audio d'urgence, tout en disposant d'une réserve de puissance suffisante pour éventuellement charger le smartphone.

Le brevet US9338624B2 décrit un téléphone cellulaire comprenant un processeur générant et envoyant un message d'alarme à destination d'au moins un destinataire prédéfini, en réponse à une action de génération automatique d'un message d'alerte par un téléphone portable à destination d'un ou plusieurs destinataires prédéterminés, le processus ou étant activé par une action unique de l'utilisateur, et un programme informatique pour détecter en arrière-plan un changement d'état d'au moins une interface homme-machine du téléphone correspondant à l'action unique d'activation, le changement d'état étant spécifique à une situation de panique associée à des paramètres préenregistrés, et en cas de détection du changement d'état, l'envoi d'un message d'interruption du processeur et d'appel d'une routine déclenchant une application ordonnant l'envoi d'un message contenant des pré-enregistrés et des paramètres enregistrés.

### Inconvénients de l'art antérieur et exposée de la solution apportée

Les solutions de l'art antérieur ne sont pas totalement satisfaisantes car elles nécessitent une adaptation au téléphone associé, et donc une compatibilité avec une grande variété de modèles. Or selon la marque et le modèle, les téléphones intelligents diffèrent entre eux en ce qui concerne la connectique (notamment la prise électrique et les interfaces numériques) et leur logiciel d'exploitation. Certaines marques utilisent des logiciels d'exploitation propriétaires limitant très fortement toute possibilité de modification ou d'ajout d'une application provenant d'une source extérieure, ce qui rend impossible l'application des solutions nécessitant une modification logicielle des interfaces homme-machine du téléphone intelligent correspondant.

Les technologies de l'art antérieur ne sont pour cette raison pas en mesure de proposer une solution universelle qui puisse être adaptée à n'importe quel téléphone de n'importe quels marque et modèle.

Afin de remédier à ces inconvénients, la présente invention concerne selon son acception la plus générale un boitier comprenant une surface de fixation configurée pour être fixée directement et/ou indirectement à un téléphone intelligent équipé d'un module NFC. Le boitier comprend en outre une première antenne NFC, un premier circuit intégré passif NFC, et une interface tactile. Le premier circuit intégré est configuré pour coopérer avec la première antenne. L'interface est configurée pour désactiver le premier circuit intégré au repos et pour activer le premier circuit intégré et la première antenne en réponse à un premier actionnement de l'interface par un utilisateur. La première antenne, en état d'activation, est configurée pour être détectable par le module NFC du téléphone. La première antenne, en état de désactivation, est configurée pour ne pas être détectable par le module NFC du téléphone.

En option, la surface de fixation est configurée pour être fixée à une surface externe d'une coque amovible ou permanente du téléphone et/ou à une surface externe du téléphone. En complément ou alternative, la surface de fixation est auto-adhésive, éventuellement protégée par un film pelable.

En complément ou alternative, le boitier est dépourvu de batterie d'alimentation.

En complément ou alternative, le premier circuit intégré est configuré pour basculer entre un premier mode actif et un deuxième mode actif en réponse à un autre actionnement de l'interface, différent du premier actionnement. En option, le mode actif en vigueur pour le premier circuit intégré est détectable par le module NFC du téléphone via la première antenne lorsque la première antenne et le premier circuit intégré sont actifs ensemble.

En option, le premier mode actif est un mode modifiable dans lequel un paramètre du premier circuit intégré est modifiable selon des données reçues via la première antenne et le deuxième mode actif est un mode figé dans lequel le paramètre est figé.

En complément ou alternative, l'interface est configurée pour rester au repos jusqu'à ce qu'une force d'actionnement par l'utilisateur dépasse un seuil de force prédéfinie.

En complément ou alternative, la première antenne, en état d'activation en réponse au premier actionnement de l'utilisateur, est détectable par le module NFC du téléphone comme étant en coopération avec le premier circuit intégré.

En option, le boitier comprend un deuxième circuit intégré passif NFC configuré. En option, l'interface est configurée pour désactiver le deuxième circuit intégré au repos et pour activer le deuxième circuit intégré en réponse à un deuxième actionnement de l'interface par l'utilisateur. Le deuxième actionnement serait différent du premier actionnement.

En option, le deuxième circuit intégré est configuré pour coopérer avec la première antenne, et l'interface est configurée pour activer la première antenne en réponse au deuxième actionnement. En option, la première antenne, en état d'activation en réponse au deuxième actionnement, est détectable par le module NFC du téléphone comme étant en coopération avec le deuxième circuit intégré, et en état d'activation en réponse au premier actionnement, est détectable par le module NFC du téléphone comme étant en coopération avec le premier circuit intégré.

En alternatif au précédent, le deuxième circuit intégré est configuré pour coopérer avec une deuxième antenne NFC du boitier. En option, l'interface est configurée pour activer la deuxième antenne en réponse au deuxième actionnement. En option, la deuxième antenne, en état d'activation en réponse au deuxième actionnement, est détectable par le module NFC du téléphone comme étant en coopération avec le deuxième circuit intégré.

En option, l'interface comprend un premier commutateur tactile. Le premier commutateur peut être au repos lorsque l'interface est au repos. L'interface peut être actionnable selon le premier actionnement via un actionnement du premier commutateur par l'utilisateur.

En option, l'interface comprend aussi un deuxième commutateur tactile. Le deuxième commutateur peut être au repos lorsque l'interface est au repos. L'interface peut être configurée pour être actionnable selon le deuxième actionnement via un actionnement du deuxième commutateur par l'utilisateur.

L'invention concerne également un terminal téléphonique comprenant un tel boîtier et un téléphone intelligent équipé d'un module NFC. Le téléphone est configuré pour communiquer avec un serveur distant via un réseau téléphonique. Le téléphone peut être configuré, en réponse à la détection de la première antenne NFC suite au premier actionnement de l'interface tactile du boîtier par un utilisateur, pour ouvrir une communication avec le serveur et pour envoyer au servir un message numérique. Le message peut comprendre un identifiant.

En option, le téléphone est configuré pour lire sa propre géolocalisation, un état de charge de sa propre batterie, et/ou une qualité de signal du réseau et pour incorporer la géolocalisation, l'état de charge, et/ou la qualité de signal dans le message.

En option, le téléphone est configuré pour opérer selon un premier mode opératoire en réponse au premier actionnement par l'utilisateur, et pour opérer selon un deuxième mode opératoire en réponse à un autre actionnement de l'interface tactile du boîtier par l'utilisateur. Le deuxième actionnement serait différent du premier actionnement.

L'invention concerne également un procédé pour signaler une urgence à un serveur distant à l'aide d'un téléphone intelligent. Un tel procédé peut comprendre une étape de fournir un tel terminal téléphonique, une étape d'actionner l'interface tactile du boîtier du terminal selon un premier actionnement en réponse à une urgence constatée ou perçue, une étape de signaler l'urgence entre une antenne NFC du boîtier et un module NFC du téléphone, et une étape de communiquer un message numérique d'urgence par le téléphone via un réseau téléphonique au serveur en réponse au premier actionnement. Le message peut comprendre un identifiant.

En option, le procédé comprend une étape d'actionner l'interface selon un deuxième actionnement, afin de paramétrer le boîtier et/ou le téléphone, et une étape de basculer le terminal entre un mode opératoire de signalement d'urgence et un mode opératoire de paramétrage du terminal, en réponse au deuxième geste d'actionnement. Le deuxième actionnement serait différent du premier actionnement. Un basculement vers le mode opératoire de paramétrage du terminal peut rendre un paramètre du boîtier et/ou du téléphone modifiable via communication entre le téléphone et le boîtier. Un basculement vers le mode opératoire de signalement d'urgence peut figer le paramètre.

En option, le procédé comprend, en réponse à un actionnement de l'interface, une étape d'allumer une lampe torche du téléphone, une étape d'enregistrer de son par un microphone du téléphone, une étape d'enregistrer d'images et/ou de vidéo par un caméra du téléphone, une étape de faire un appel téléphonique par le téléphone, et/ou une étape d'enclenchement d'alarme audio et/ou visuel par le téléphone.

### Exposé des dessins

La présente invention sera mieux comprise à la lecture de la description qui suit, concernant un exemple non limitatif de réalisation illustré par les dessins annexés où :
[FIGURE 1] la figure 1 représente une vue schématique partielle d'un terminal téléphonique comprenant un téléphone intelligent et un boîtier, tel que vu du « recto »du téléphone intelligent.
[FIGURE 2] la figure 2 représente un schéma d'un module NFC du boîtier.

### Description détaillée des modes de réalisation

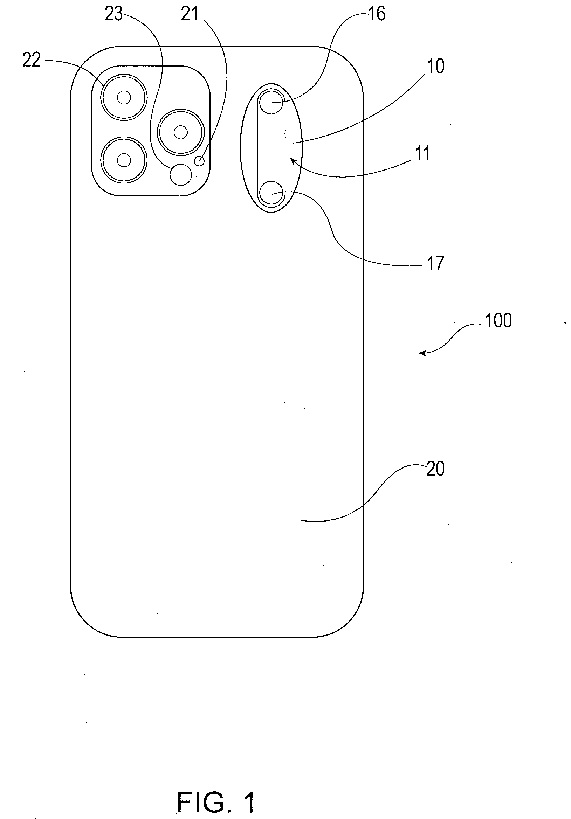

On voit, en figure 1, un terminal 100 téléphonique selon un mode de réalisation. Le terminal comprend un boîtier 10 et un téléphone intelligent 20 configuré pour coopérer avec le boîtier. Le terminal 100 est représenté avec une vue recto du téléphone 20. Par le « recto » d'un téléphone on entend une surface externe du téléphone 20 opposée à un écran principal dudit téléphone.

Par « téléphone intelligent » (ou « *smartphone* » en anglais) on entend un dispositif portatif incorporant les fonctionnalités d'un téléphone portable ainsi que des fonctionnalités d'un ordinateur personnel, le tout alimenté par une batterie. À titre d'exemple non-limitatif, on connaît par exemple des téléphones intelligents offerts par Apple (e.g. ceux commercialisés sous la marque « iPhone »), Samsung (e.g. ceux commercialisés sous la marque « Galaxy »), Huawei (e.g. ceux commercialisés sous la marque « Honor »), etc. Depuis plus de dix ans, il est courant d'équiper de tels téléphones d'un module NFC. La NFC (désignant en anglais « *near-field communication* », soit « communication en champ proche » en français) est une technologie de communication sans-fil offrant portée d'une dizaine de centimètres. Ainsi, le téléphone 20 visible en figure 1 est équipé d'un module NFC.

Le téléphone 20 visible en figure 1 peut également comprendre un microphone 21 pour enregistrer de l'audio en dehors d'appels téléphoniques, un ou plusieurs appareils-photos pour capturer des images, voire une ou plusieurs caméras 22 pour enregistrer des vidéos voire capturer des images à l'instar d'un appareil-photo, une lumière 23 servant à illuminer des scènes lors des captures d'images et/ou de vidéos et/ou à faire d'office de lampe torche, un haut-parleur pour émettre des sons audibles sur des dizaines de mètres, ou même des combinaisons de ceux-ci.

Le téléphone 20 visible en figure 1 est configuré de sorte que son module NFC soit actif en permanence. Le boîtier 10, quant à lui, comprend un module NFC passif et une interface 11 tactile. Au repos, l'interface 11 du boîtier 10 rend le module NFC du boîtier indétectable par le module NFC actif du téléphone 20. Lorsqu'un utilisateur actionne l'interface 11, le module NFC du boîtier 10 devient détectable par le module NFC du téléphone 20.

Le module NFC du boîtier 10 comprend une première antenne NFC et un premier circuit intégré passif NFC. Le premier circuit intégré passif NFC est configuré pour coopérer avec la première antenne NFC. L'interface 11 du boîtier 10, au repos, est configurée pour désactiver le premier circuit intégré. L'interface 11 du boiter 10, en réponse à l'actionnement par l'utilisateur, est configurée pour activer le premier circuit intégré et la première antenne. La première antenne, en état d'activation, est configurée pour être détectable par le module NFC du téléphone 20, rendant ainsi le module NFC du boîtier 10 détectable par le module NFC du téléphone. En revanche, la première antenne est configurée pour ne pas être détectable par le module NFC du téléphone 20 lorsqu'elle est en état de désactivation.

Le téléphone 20 est configuré pour communiquer avec un serveur distant via un réseau téléphonique, et aussi pour répondre à un actionnement de l'interface 11 du boîtier 10 par l'utilisateur de la manière suivante : le téléphone 20 ouvre une communication avec le serveur via le réseau, et envoie audit serveur un message numérique. Le message envoyé au serveur peut comprendre un identifiant.

En option, le téléphone 20 est configuré pour lire sa propre géolocalisation, un état de charge de sa batterie, et/ou une qualité de signal du réseau, et aussi pour incorporer ladite géolocalisation, ledit état de charge, et/ou ladite qualité de signal dans ledit message.

L'utilisateur du terminal 100 peut piloter le téléphone 20, et même les interactions du téléphone avec le réseau, en interagissant avec le boîtier 10. À titre d'exemple, le message envoyé au serveur peut servir à établir un appel téléphonique, à envoyer un message (e.g. SMS, MMS, RCS etc.) à un utilisateur d'un autre téléphone, à communiquer sur internet, etc. Le destinataire de l'appel ou du message destiné à l'utilisateur de l'autre téléphone, ou de la communication internet peut être préétabli ou pré-enregistré au niveau du terminal 100, par exemple,

À titre d'exemple, un utilisateur peut se servir du terminal 100 pour signaler une urgence au serveur, et éventuellement à tout autre destinataire concerné, en actionnant l'interface 11 du boîtier 10 en réponse à l'urgence. Le module passif NFC du boîtier 10 s'active via l'actionnement de l'interface 11 et devient détectable par le module actif NFC du téléphone 20. Le module actif NFC du téléphone 20 alimente le module passif NFC du boîtier 10, permettant au module NFC du boîtier de signaler l'urgence au téléphone via la communication NFC avec le module NFC du téléphone. En réponse à ce signalement de l'urgence par le boîtier 10, le téléphone 20 communique un message correspondant au serveur via le réseau téléphonique. Le message peut comprendre un identifiant. L'identifiant peut correspondre à l'utilisateur, au terminal, au téléphone, au boîtier, et/ou au destinataire, par exemple.

Le terminal 100 peut être configuré pour opérer dans une pluralité de modes opératoires et de changer entre ces modes opératoires en réponse à un actionnement de basculement de mode opératoire, qui est différent du premier actionnement.

Ce basculement des modes opératoires du terminal 100 peut être réalisé au niveau du boîtier 10 par un basculement du premier circuit intégré du module NFC entre un premier mode actif et un deuxième mode actif en réponse à l'actionnement de basculement de mode opératoire.

Le mode actif en vigueur pour le premier circuit intégré du module NFC du boîtier 10 peut être détectable par le module NFC du téléphone 20 via la première antenne du module NFC du boîtier lorsque la première antenne et le premier circuit intégré sont actifs ensemble.

À titre d'exemple, le terminal 100 peut basculer entre un mode opératoire de signalement d'urgence (détaillé supra) et un mode opératoire de paramétrage en réponse à l'actionnement de basculement de mode opératoire. Lors du basculement vers le mode opératoire de paramétrage, un paramètre du boîtier 10 et/ou du téléphone 20 devient modifiable. La modification de ce paramètre peut intervenir en réponse à des informations communiquées via NFC au téléphone 20 par le boîtier et/ou au boîtier 10 par le téléphone. Ce paramètre devient figé lors du basculement vers le mode opératoire de signalement d'urgence.

Cette fonctionnalité du terminal 100 peut être mise en oeuvre au niveau du boitier 10 en définissant le premier mode actif du premier circuit intégré du module NFC du boitier comme étant un mode modifiable dans lequel un paramètre du premier circuit intégré est modifiable selon des données reçues via la première antenne, et en définissant le deuxième mode actif du premier circuit intégré du module NFC du boitier comme étant un mode figé dans lequel ledit paramètre est figé. La possibilité de basculer le circuit intégré entre un mode modifiable et un mode figé est totalement indépendante de toute finalité de tout mode opératoire du terminal 100 autre que le mode opératoire de paramétrage du terminal. Mais à titre d'exemple, le premier circuit intégré peut être en mode figé lorsque le terminal 100 est en mode signalement d'urgence, et le premier circuit intégré peut en mode modifiable lorsque le terminal est en mode paramétrage. Le basculement du circuit intégré depuis le mode modifiable vers le mode figé peut être permanent.

En complément ou alternative, le basculement entre les modes opératoires du terminal 100 et/ou entre les modes actifs du circuit intégré peu(ven)t être enclenché(s) au niveau du téléphone 20 au lieu de l'interface 11.

En option, l'utilisateur peut provoquer, en actionnant l'interface 11 du boitier 10, l'allumage de la lumière 23 du téléphone 20, l'enregistrement de son par le microphone 21 du téléphone, la capture d'images par l'appareil photo et/ou la caméra 22 du téléphone, l'enregistrement de films par la caméra du téléphone, la réalisation d'un appel téléphone par le téléphone, et/ou l'enclenchement d'une alarme par le téléphone. L'alarme peut comprendre un composant audio, émis par le haut-parleur du téléphone, et/ou un composant visuel, émis via l'écran, la lumière, et/ou autre composant ou accessoire lumineux du téléphone.

Le boitier 10 est apte à être fixé en place par rapport au téléphone 20. Alors que la figure 1 représente la fixation directe du boitier 10 à une surface externe du téléphone 20, il est également envisagé de fixer le boitier indirectement au téléphone. À titre d'exemple, le boitier 10 peut être fixé indirectement au téléphone 20 en étant fixé directement à une coque amovible ou permanente du téléphone. À titre non-limitative, le boitier 10 peut être fixé à une surface externe de la coque. Par « surface externe » d'une coque on entend une surface de la coque qui reste exposée lorsque la coque est en place sur le téléphone 20. À titre d'exemple, le boitier 10 peut être fixé au dos de la coque. Par « dos » de la coque on entend la surface externe de la coque correspondant au recto du téléphone 20. Afin d'être fixé en place par rapport au téléphone 20, il comprend une surface de fixation. À titre d'exemple, le boîtier 10 peut faire partie intégrante de la coque du téléphone, dans ce cas la surface de fixation boitier est celle disposée vers la surface externe du téléphone 20.

La surface de fixation peut être adhésive. Avant que le boîtier 10 ne soit fixé en place par rapport au téléphone 20, la surface de fixation peut être protégée par un film pelable. Pour fixer le boîtier 10 en place via la surface de fixation, il conviendrait alors de retirer le film pelable pour exposer l'adhésif de la surface de fixation et ensuite de mettre la surface de fixation du boîtier en contact avec la surface sur laquelle le boîtier devrait être positionné.

Le boitier 10 peut présenter une épaisseur, mesurée perpendiculairement à la surface sur laquelle la surface de fixation du boîtier est fixée, de quelques millimètres.

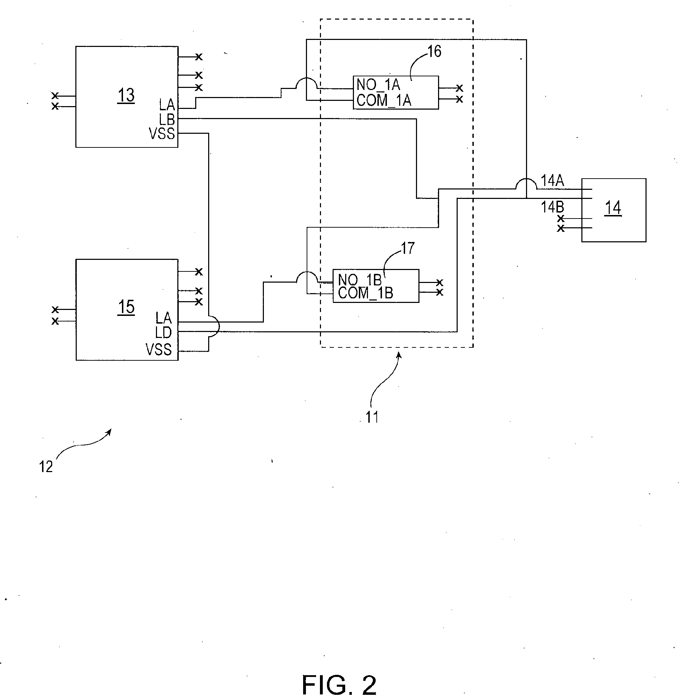

La figure 2 représente un schéma électronique du boîtier, et plus particulièrement de son module NFC passif 12.

Le module NFC 12 du boîtier peut être dépourvu d'alimentation. Grâce à son caractère passif, l'absence d'une batterie d'alimentation n'empêche pas l'opération du module NFC 12 du boîtier, car le module NFC du boîtier est alimenté par induction via la coopération NFC avec le module NFC du téléphone (qui est un module actif). En effet, cette interaction permet au boîtier de communiquer avec le téléphone sans que ce boîtier ait besoin d'être relié par fil électrique ou par câble électrique au téléphone et surtout, ce le module NFC du boîtier ne nécessite aucun chargement aux fins de cette communication car passif. Ainsi, le boîtier peut être réalisé comme un petit accessoire sur le téléphone ou sur sa coque qui peut être activé à tout moment et détecté par le téléphone grâce à cette interaction.

Toutefois, cela n'exclut pas l'éventuelle présence d'une batterie dans le boîtier. À titre d'exemple non-limitatif, une telle batterie pourrait être envisagée à d'autres fins que d'alimenter le module NFC du boîtier.

Le premier circuit intégré NFC 13 est une étiquette connectée comprenant une mémoire EEPROM, un microcontrôleur, et un circuit de détection d'alimentation et de détection d'un champs radiofréquence. Il s'agit par exemple d'un circuit intégré commercialisé par la société NXP Semiconductors ^{™} sous la référence NT3H2111, présentant 8 pins d'entrée/sortie.

Le premier circuit intégré NFC 13 est un composant NFC passif basé sur la norme ISO/IEC 14443-3 Type A. Il est alimenté par un champ NFC émis par le téléphone sur lequel (ou sur la coque duquel) le boitier est fixé pour recevoir l'alimentation électrique et pour être détectable en cas d'activation.

Comme défini dans la norme ISO/IEC 14443-3 Type A pour les deux sens de communication de données, il y a un bit de départ (début de communication) au début de chaque trame. Chaque octet est transmis avec un bit de parité impaire à la fin.

Pour un paramètre multi-octets, l'octet de poids faible est toujours transmis en premier. Par exemple, lors d'une lecture dans la mémoire à l'aide de la commande READ, l'octet 0 du bloc adressé est transmis en premier, suivi des octets 1 à 3 de ce bloc. La même séquence se poursuit pour le bloc suivant et tous les blocs suivants.

Le premier circuit intégré NFC 13 peut être reliée à un connecteur 14 pour le branchement à la première antenne NFC. À titre d'exemple, le premier pin de connexion d'antenne LA du premier circuit intégrés NFC 13 est connecté à la première entrée de l'antenne NFC 14A via le connecteur 14, et le deuxième pin de connexion d'antenne LB est connecté à la deuxième entrée de l'antenne NFC 14B via le connecteur.

La première antenne NFC branchée sur le connecteur d'antenne 14 est par exemple l'antenne référencée sous la référence FXR 1515 NFC de la marque TAOLAS ^{™} à la dimension 15x15mm et une fréquence de résonnance à 13.56 MHz sur lequel un câble biphasé est soudé pour connecter l'antenne à un PCB (« *Printed Circuit Board »* en anglais, ou « circuit imprimé en français) supportant le module NFC du boitier.

Le premier circuit intégré NFC 13 est d'abord relié à l'interface 11 du boitier. À titre d'exemple, le premier pin de connexion d'antenne LA du premier circuit intégré NFC 13 est relié à une première connexion NO_1A de l'interface 11, et une deuxième connexion COM_1A de l'interface, apte à être mis temporairement en liaison avec cette première connexion NO_1A lors d'actionnement de l'interface, est reliée à l'entrée d'antenne 14 correspondante du pin de connexion d'antenne LA du premier circuit intégré NFC 13.

Lorsque l'interface 11 n'est pas actionnée, l'interface est au repos et la liaison entre l'un au moins des pins des connexions d'antenne du premier circuit intégré NFC 13 et l'entrée de la première antenne NFC n'est pas effectuée.

En revanche, l'actionnement de l'interface 11 établit un circuit électronique NFC passif complet comprenant une antenne NFC et un circuit intégré passif NFC 13 coopérant l'un avec l'autre, ce qui permet de désactiver ou d'activer une antenne NFC et la rendre détectable ou non par un lecteur NFC, tel que le module NFC du téléphone (qui est un module NFC actif) au recto (ou autre surface externe) duquel (ou sur le dos ou une autre surface externe de la coque duquel/de laquelle) le boîtier est placé.

Le module NFC 12 du boitier et le module NFC du téléphone établissent alors un protocole de communication entre eux. Ce protocole commande la réalisation d'une ou plusieurs actions par le téléphone, en fonction de la configuration du téléphone et/ou de la configuration du terminal.

À titre d'exemple, le téléphone peut entrer en communication avec un serveur distant via un réseau téléphonique capté par le téléphone et envoyer un message comprenant un identifiant au serveur. À titre non-limitatif, ce serveur distant peut être un serveur téléphonique ou un serveur internet.

La finalité du message peut être de demander l'établissement d'une communication (e.g. un appel et/ou un message SMS, MMS, RCS ou autre message téléphonique) entre l'expéditeur et le(s) destinataire(s) (e.g. dans le cas d'un serveur téléphonique), ou même de communiquer de l'information à l'attention du (des) destinataire(s) (e.g. dans le cas où le serveur est le destinataire, ou dans le cas où le serveur relaye le message au destinataire, comme l'on trouve souvent chez des serveurs internet). En option, le serveur peut proposer un destinataire en fonction du contenu du message - par exemple, il peut proposer l'utilisation numéro d'urgence local en fonction de la géolocalisation dans le cas d'un signalement d'urgence.

À titre d'exemple, le message peut comprendre un identifiant. L'identifiant peut correspondre à un ou plusieurs destinataire(s) (par exemple humain et/ou informatique) du message, et/ou à l'expéditeur du message (par exemple un identifiant associé au terminal, à son boîtier et/ou à son téléphone, et/ou à son utilisateur réel ou présumé). Dans le cadre d'une communication par appel téléphonique ou par message téléphonique, l'identifiant peut comprendre autant de numéros préenregistrés que de destinataires prédéterminés.

Le message comprend au moins composant numérique correspondant à la finalité du message.

À titre d'exemple, un message envoyé pour signaler une urgence (parfois autrement dit pour signaler une alerte) peut contenir des informations telles que le nom et le prénom enregistré et/ou la localisation fournie par le module de géolocalisation du téléphone, et le cas échéant établit une transmission des signaux sonores captés par le microphone du téléphone et/ou des images et/ou vidéos captées par la caméra et/ou l'appareil-photo du téléphone. Ce protocole peut aussi commander l'émission sur la session ouverte d'information techniques telles que l'état de charge du téléphone et/ou la qualité locale du réseau. Ce protocole est activé par une application associée au service du fournisseur du boîtier, quel que soit l'état du téléphone, y compris lorsqu'il est en mode « veille » ou lorsqu'il exécute une autre application.

Comme on le voit en figure 2, le module NFC 12 du boîtier peut comprendre, en plus du premier circuit intégré passif NFC 13, un deuxième circuit intégré passif NFC 15. Le deuxième circuit intégré 15 peut être identique au premier circuit intégré NFC 13.

Ce deuxième circuit intégré passif NFC 15 peut être configuré pour coopérer avec la première antenne NFC. Dans ce cas, l'interface 12 est configurée pour désactiver le deuxième circuit intégré 15 au repos et pour activer le deuxième circuit intégré et la première antenne en réponse à un deuxième actionnement de l'interface par l'utilisateur, qui est différent premier actionnement. Par ailleurs, dans ce cas, la première antenne, en état d'activation en réponse au premier actionnement de l'utilisateur, est détectable par le module NFC du téléphone comme étant en coopération avec ledit premier circuit intégré 13. De même, dans ce cas, la première antenne, en état d'activation en réponse au deuxième actionnement, est détectable par le module NFC dudit téléphone comme étant en coopération avec le deuxième circuit intégré 15.

En complément ou alternative, on peut prévoir une deuxième antenne NFC dans le module NFC 12 du boitier, configurée pour coopérer avec le deuxième circuit intégré du module NFC du boitier. Dans ce cas, l'interface 11 est configurée pour désactiver le deuxième circuit intégré 15 et la deuxième antenne au repos et pour activer le deuxième circuit intégré 15 et la deuxième antenne en réponse au deuxième actionnement de l'interface par l'utilisateur. Par ailleurs, dans ce cas, la première antenne, en état d'activation en réponse au premier actionnement, est détectable par le module NFC du téléphone comme étant en coopération avec le premier circuit intégré 13. De même, dans ce cas, la deuxième antenne, en état d'activation en réponse au deuxième actionnement, est détectable par le module NFC du téléphone comme étant en coopération avec le deuxième circuit intégré 15.

Lorsque le boitier comprend deux circuits intégrés NFC 13, 15 configurés pour coopérer avec une même antenne NFC, l'interface 11 peut être configurée pour que l'antenne soit donc partagée à tour de rôle par les circuits intégrés NFC 13, 15 en fonction de l'actionnement de l'interface par l'utilisateur.

À titre d'exemple l'interface 11 du boitier peut comprendre un premier commutateur tactile 16 qui est perceptible facilement par l'utilisateur, de manière tactile même si le téléphone est dans une poche vestimentaire ou dans un sac à main ou autre bagage et qu'il peut actionner intuitivement dès lors qu'il conserve un accès manuel à son téléphone. Lorsque l'interface 11 est au repos, son premier commutateur 16 est, lui aussi, au repos. Le premier actionnement pourrait être un actionnement du premier commutateur 16. De manière classique, un commutateur est un dispositif apte à basculer entre plusieurs états. Par l'« actionnement » d'un commutateur tactile, on entend une manipulation du commutateur servant à basculer le commutateur entre plusieurs de ses états. À titre d'exemple, l'utilisateur peut appuyer sur le commutateur pour effectuer la manipulation nécessaire pour obtenir ce basculement le relâchement du commutateur permet alors un retour à son état de repos.

À titre d'exemple, le premier commutateur 16 peut être un interrupteur ouvert au repos, par exemple le commutateur commercialisé par la société Panasonic ^{™} sous la référence EVQ3P202K ayant pour circuit interne une logique unipolaire unidirectionnel normalement ouverte (SPST-NO). L'actionnement d'un commutateur peut comprendre un ou une série de basculement(s) entre son (ou l'un au moins de ses) état(s) de fermeture et son (ou l'un au moins de ses) état(s) d'ouverture. Dans ce cas, on peut différencier entre deux actionnements différents par une différence de durée et/ou ou de quantité de basculements par exemple.

Comme on le voit en figure 2, l'interface peut comprendre au moins un deuxième commutateur tactile 17. Lorsque l'interface 11 est au repos, son deuxième commutateur peut 17, lui aussi, être au repos. Le deuxième commutateur tactile 17 peut être identique au premier commutateur tactile 16. Lorsque l'interface 11 comprend plusieurs commutateurs (ou plus généralement composants aptes à être - manipulés par l'utilisateur), on peut différentier entre deux actionnements différents de l'interface par une différence du commutateur (ou des commutateurs) ou de composant(s) manipulé(s) lors des différents actionnements. À titre d'exemple, l'utilisateur peut effectuer le premier actionnement en actionnant le premier commutateur 16, et peut effectuer le deuxième actionnement en actionnant le deuxième commutateur 17.

Le terminal peut comprendre un moyen d'empêchement d'actionnement configuré pour limiter des actionnements de l'interface par inadvertance de l'utilisateur.

À titre d'exemple, le téléphone peut être configuré pour détecter une telle inadvertance et pour ne pas répondre comme il le ferait en réponse au premier actionnement, ou au deuxième actionnement le cas échéant. À titre d'exemple, le téléphone peut être configuré pour comparer une durée d'actionnement à une limite maximale d'actionnement, et pour déterminer qu'un actionnement dépassant cette limite soit par inadvertance. Ainsi, des actionnements passives, comme si l'utilisateur s'assoit sur le terminal, et/ou si l'utilisateur se trouve serré dans des transports en commun, seraient déterminés comme étant par inadvertance.

En complément ou en alternative, dans le cas où l'interface comprend un ou plusieurs commutateurs tactiles, chaque commutateur tactile 16, 17 peut comprendre un seuil de force d'actionnement en dessous duquel le commutateur reste au repos. Ainsi, le poids d'un animal domestique et/ou du terminal lui-même peut rester insuffisant pour actionner l'interface. À titre d'exemple, un tel seuil peut être d'au moins 5 newtons par commutateur, ou au moins 6 newtons par commutateur, ou au moins 7 newtons par commutateur.

Il est envisagé de fournir à un utilisateur un terminal -c'est-à-dire un téléphone, éventuellement avec sa coque préinstallée là-dessus, avec le boîtier déjà fixé au téléphone ou à sa coque, et avec le boîtier et/ou le téléphone configuré(s) pour coopérer et communiquer l'un avec l'autre. Dans ce cas, il est envisagé qu'un utilisateur définisse les paramètres nécessaires pour que le téléphone réponde au boîtier selon les préférences de l'utilisateur. Par exemple, il peut être invité à s'identifier, à identifier le(s) destinataire(s), le contenu des messages envoyés à ceci, les actions réalisées par le téléphone, etc.

En ce qui concerne des paramètres concernant les actions réalisées par le téléphone, il est envisagé qu'un tel / de tels paramètres au moins soi(en)t stocké(s) dans le téléphone et/ou dans un circuit intégré passif NFC du boitier.

Il est également envisagé de fournir le *hardware* du terminal comme détaillé ci-dessus mais sans configuration préalable du terminal. Dans ce cas, il est envisagé de paramétrer le *hardware* du terminal en téléchargeant un logiciel au téléphone du terminal. Le logiciel peut ensuite inviter l'utilisateur à définir l'un au moins des paramètres détaillés ci-dessus.

Il est également envisagé de fournir le boîtier séparément du téléphone et de la coque le cas échéant avec laquelle le boîtier sera combiné pour former le *hardware* du terminal. Dans ce cas, il est envisagé de fixer le boitier par sa surface de fixation à une surface externe du téléphone ou de sa coque, obtenant ainsi le *hardware* du terminal, et ensuite de paramétrer le terminal et, le cas échéant, les préférences de l'utilisateur comme détaillé(s) ci-dessus. Si la surface de fixation est protégée par un film de protection, celui-ci peut être retiré avant fixation par adhésion de la surface de fixation au téléphone ou à sa coque.

## Revendications

1. - Boîtier (10) comprenant une surface de fixation configurée pour être fixée directement et/ou indirectement à un téléphone (20) intelligent équipé d'un module NFC, ledit boîtier comprenant en outre :
- une première antenne NFC,
- un premier circuit intégré passif NFC (13), configuré pour coopérer avec la première antenne, et une interface tactile (11) configurée pour désactiver ledit premier circuit intégré au repos et pour activer ledit premier circuit intégré et ladite première antenne en réponse à un premier actionnement de ladite interface par un utilisateur,
ladite première antenne, en état d'activation, étant configurée pour être détectable par le module NFC du téléphone ; et
ladite premier antenne, en état de désactivation, étant configurée pour ne pas être détectable par le module NFC du téléphone.

2. - Boîtier (10), selon la revendication 1, **caractérisé en ce que** :
- la surface de fixation est configurée pour être fixée à une surface externe d'une coque amovible ou permanente du téléphone (20),
- la surface de fixation est configurée pour être fixée à une surface externe du téléphone, et/ou
- la surface de fixation est auto-adhésive, éventuellement protégée par un film pelable.

3. - Boîtier (10), selon l'une quelconque des revendications 1 à 2, **caractérisé en ce qu'**il est dépourvu de batterie d'alimentation.

4. - Boîtier (10), selon l'une quelconque des revendications 1 à 3, **caractérisé en ce que** :
- le premier circuit intégré (13) est configuré pour basculer entre un premier mode actif et un deuxième mode actif en réponse à un autre actionnement de l'interface (11), différent du premier actionnement, et
- le mode actif en vigueur pour ledit premier circuit intégré (13) est détectable par le module NFC du téléphone (20) via la première antenne lorsque ladite première antenne et ledit premier circuit intégré sont actifs ensemble.

5. - Boîtier (10), selon la revendication 4, **caractérisé en ce que** le premier mode actif est un mode modifiable dans lequel un paramètre du premier circuit intégré (13) est modifiable selon des données reçues via la première antenne et le deuxième mode actif est un mode figé dans lequel ledit paramètre est figé.

6. - Boîtier (10), selon l'une quelconque des revendications 1 à 5, **caractérisé en ce que** l'interface (11) est configurée pour rester au repos jusqu'à ce qu'une force d'actionnement par l'utilisateur dépasse un seuil de force prédéfinie.

7. - Boîtier (10), selon l'une quelconque des revendications 1 à 6, **caractérisé en ce que** :
- la première antenne, en état d'activation en réponse au premier actionnement par l'utilisateur, est détectable par le module NFC du téléphone (20) comme étant en coopération avec ledit premier circuit intégré (13) ;
- ledit boîtier comprend un deuxième circuit intégré passif NFC (15) configuré pour coopérer avec ladite première antenne ;
- l'interface (11) est configurée pour désactiver ledit deuxième circuit intégré au repos et pour activer ledit deuxième circuit intégré et ladite première antenne en réponse à un deuxième actionnement de ladite interface par l'utilisateur, ledit deuxième actionnement étant différent dudit premier actionnement ;
- la première antenne, en état d'activation en réponse audit deuxième actionnement, est détectable par ledit module NFC dudit téléphone comme étant en coopération avec ledit deuxième circuit intégré.

8. - Boîtier (10), selon l'une quelconque des revendications 1 à 6, **caractérisé en ce que** :
- la première antenne, en état d'activation en réponse au premier actionnement, est détectable par le module NFC du téléphone (20) comme étant en coopération avec le premier circuit intégré (13);
- ledit boitier comprend une deuxième antenne NFC et un deuxième circuit intégré passif NFC (15) configuré pour coopérer avec ladite deuxième antenne ;
- l'interface (11) est configurée pour désactiver ledit deuxième circuit intégré et ladite deuxième antenne au repos et pour activer ledit deuxième circuit intégré et ladite deuxième antenne en réponse à un deuxième actionnement de ladite interface par l'utilisateur, ledit deuxième actionnement étant différent dudit premier actionnement ;
- ladite deuxième antenne, en état d'activation en réponse audit deuxième actionnement, est détectable par ledit module NFC dudit téléphone comme étant en coopération avec ledit deuxième circuit intégré.

9. - Boîtier (10), selon l'une quelconque des revendications 7 à 8, **caractérisé en ce que** :
- l'interface (11) comprend un premier commutateur tactile (16) et un deuxième commutateur tactile (17) ;
- ledit premier commutateur et ledit deuxième commutateur sont au repos lorsque ladite interface est au repos ;
- ladite interface est configurée pour être actionnable selon le premier actionnement via un actionnement dudit premier commutateur par l'utilisateur ;
- ladite interface est configurée pour être actionnable selon le deuxième actionnement via un actionnement dudit deuxième commutateur par l'utilisateur.

10. - Terminal (100) téléphonique comprenant :
- un boîtier (10) selon l'une quelconque des revendications 1 à 9,
- un téléphone (20) intelligent équipé d'un module NFC et configuré pour communiquer avec un serveur distant via un réseau téléphonique, ledit téléphone étant configuré, en réponse à la détection de la première antenne NFC du boîtier suite au premier actionnement de l'interface (11) tactile du boîtier par un utilisateur, pour ouvrir une communication avec ledit serveur et pour envoyer audit servir un message numérique comprenant un identifiant.

11. - Terminal (100), selon la revendication 10, **caractérisé en ce que** le téléphone (20) est configuré pour lire sa propre géolocalisation, un état de charge de sa propre batterie, et/ou une qualité de signal du réseau et pour incorporer ladite géolocalisation, ledit état de charge, et/ou ladite qualité de signal dans ledit message.

12. - Terminal (100), selon l'une quelconque des revendications 10 à 11, **caractérisé en ce que** le téléphone (20) est configuré pour opérer selon un premier mode opératoire en réponse au premier actionnement, et pour opérer selon un deuxième mode opératoire en réponse à un autre actionnement de l'interface (11) tactile du boîtier (10), différent dudit premier actionnement, par l'utilisateur.

13. - Procédé pour signaler une urgence à un serveur distant à l'aide d'un téléphone (20) intelligent, ledit procédé comprenant :
- une étape de fournir un terminal (100) téléphonique selon l'une quelconque des revendications 10 à 12, ledit téléphone faisant partie dudit terminal ;
- une étape d'actionner une interface (11) tactile d'un boîtier (10) dudit terminal téléphonique selon un premier actionnement en réponse à une urgence constatée ou perçue ;
- une étape de signaler l'urgence entre une antenne NFC du boîtier et un module NFC dudit téléphone ; et
- une étape de communiquer un message numérique d'urgence par le téléphone via un réseau téléphonique audit serveur en réponse au premier actionnement, ledit message comprenant un identifiant.

14. - Procédé, selon la revendication 13, **caractérisé en ce que** :
- ledit procédé comprend :
∘ une étape d'actionner l'interface (11) selon un deuxième actionnement, différent du premier actionnement, afin de paramétrer le boîtier (10) et/ou le téléphone (20); et
∘ une étape de basculer le terminal (100) entre un mode opératoire de signalement d'urgence et un mode opératoire de paramétrage du terminal, en réponse au deuxième geste d'actionnement ; et
- un basculement vers le mode opératoire de paramétrage du terminal rend un paramètre du boîtier et/ou du téléphone modifiable via communication entre le téléphone et le boîtier, et
- un basculement vers le mode opératoire de signalement d'urgence fige ledit paramètre.

15. - Procédé, selon la revendication 13 ou 14, comprenant, en réponse à un actionnement de l'interface (11) :
- une étape d'allumer une lampe torche (23) du téléphone (20) ;
- une étape d'enregistrer de son par un microphone (21) du téléphone ;
- une étape d'enregistrer d'images et/ou de vidéo par un caméra (22) du téléphone ;
- une étape de faire un appel téléphonique par le téléphone ; et/ou
- une étape d'enclenchement d'alarme audio et/ou visuel par le téléphone.
